# EUROPEAN PATENT SPECIFICATION

(11) **EP 3 727 122 B1**
(45) Date of publication and mention of the grant of the patent: **21.06.2023**
(21) Application number: 18890770.3
(22) Date of filing: 18.12.2018
(51) Int. Cl.: G05D 1/00, G05D 1/02, A47L 11/40, B25J 11/00, B25J 9/16

(54) **ROBOT CLEANERS AND CONTROLLING METHOD THEREOF**
ROBOTERREINIGER UND STEUERUNGSVERFAHREN DAFÜR
ROBOTS NETTOYEURS ET LEUR PROCÉDÉ DE COMMANDE

(30) Priority: 18.12.2017 KR 20170174493
(43) Date of publication of application: 28.10.2020
(73) Proprietor: LG Electronics Inc., Seoul 07336 (KR)
(72) Inventor: CHO, Ilsoo, Seoul 08592 (KR); KIM, Hyunji, Seoul 08592 (KR); SHIN, Yongmin, Seoul 08592 (KR)
(74) Representative: Ter Meer Steinmeister & Partner
(86) International application number: PCT/KR2018/016070
(87) International publication number: WO 2019/124913

(56) References cited:
- WO-A1-2017/073955
- JP-A- 2015 160 022
- JP-A- 2015 160 022
- JP-A- 2016 212 462
- JP-B2- 3 926 209
- KR-A- 20130 053 518
- KR-A- 20140 017 216
- KR-A- 20140 017 216

## Description

### Technical Field

The present invention relates to a robot cleaner, more particularly to a collaborative control among a plurality of robot cleaners.

### Background Art

Generally, a robot has been developed for an industrial use, and has played some roles in factory automation. As the robot has recently been applied to various fields, medical robots, space robots, home robots used at home, etc. have been developed. A robot capable of traveling by itself is called a moving robot.

A representative of the home robots is a robot cleaner, a kind of home electronic appliance capable of performing cleaning by sucking dust or foreign substances with autonomously moving on an area to be cleaned. The robot cleaner can autonomously travel by a rechargeable battery. Also, when the battery is required to be charged or cleaning is completed, the robot cleaner looks for a charging stand, moves toward it and charges the battery.

In addition, it has already been known that there are several ways robot cleaners determine a current location based on an immediately preceding location information while moving continuously, and create a map of an area to be cleaned without human control.

There are some cases where a plurality of robot cleaners simultaneously move for cleaning operations in the same area, especially in a spacious area.
US 2018/317725 A1 presents a cleaning robot and a method of controlling the same. The cleaning robot includes a modular in which one or more modules configured to support different functions are integrated, and a controller configured to control the overall operation of the cleaning robot. In one example, the cleaning robot includes a determiner configured to determine a joint cleaning method to be performed with the at least one other cleaning robot. The determiner determines a cleaning method such that, when dry cleaning is performed on a certain region by the first robot, the second cleaning robot performs wet cleaning on the same region in which dry cleaning has been completed, and the cleaning robot performs sterilizing cleaning on the same region in which wet cleaning has been completed. That is, the determiner determines a joint cleaning method in consideration of supporting specifications between the cleaning robots connected through the communication unit.

### Disclosure of Invention

### Technical Problem

It is an object of the invention to provide a robot cleaner capable of effectively cleaning an area to be cleaned by using a plurality of robot cleaners.

In instances where a plurality of robot cleaners simultaneously move for cleaning operations in the same area to be cleaned, there are some concerns about collisions among the robot cleaners or interference in their normal cleaning operations. It is therefore another object of the invention to solve this problem.

In instances where a plurality of robot cleaners simultaneously move for cleaning the same area to be cleaned in a manner that one robot cleaner follows another robot cleaner for cleaning, there are some problems that several technical solutions are required to implement, which results in higher manufacturing costs, and that it is not easy to improve the accuracy in operating in this manner. It is therefore another object of the invention to solve this problem, and thus, even if one robot cleaner does not move for cleaning operations in a manner following another robot cleaner, to take advantages of results from this manner of cleaning operations.

In instances where while one robot cleaner for dry cleaning performs cleaning by sucking foreign substances on a floor, and another robot cleaner for wet cleaning simultaneously performs cleaning by wet mopping in the same area, there are some possibilities that the floor on which the wet cleaning has already been performed can be contaminated again by subsequently cleaning. It is therefore another object of the invention to solve this problem.

It is yet another object of the invention to cause a plurality of robot cleaners to do collaborative cleaning according to personal taste or circumstances.

### Solution to Problem

One or more objects of the present technique are achieved by the invention set out by the features of the independent claim(s).

In accordance with an embodiment, the second robot cleaner may start cleaning of the second area after the first robot cleaner has performed clean operations in the second area more than a predetermined standard.

In accordance with an embodiment, the second robot cleaner may start cleaning of the second area after cleaning of the first area has been completed.

In accordance with an embodiment, the second robot cleaner may start cleaning of the second area after the first robot cleaner has completed cleaning of the second area.

In accordance with an embodiment, the first robot cleaner may perform an operation for sucking foreign substances, and the second robot cleaner performs an operation for wet mopping.

In accordance with an embodiment, the method may further include a robot cleaner selection step for selecting the first robot cleaner and the second robot cleaner from the plurality of robot cleaners registered for a collaborative cleaning.

In accordance with an embodiment, the method may further include a step for selecting one of the first and second robot cleaners as a master robot cleaner.

In accordance with an embodiment, the master robot cleaner may be configured to control cleaning operations of the other robot cleaner of the first and second robot cleaners.

In accordance with an embodiment, the method may further include a mode selection step for selecting a first mode from a plurality of collaborative cleaning modes which is per-set to perform the cleaning step.

The plurality of collaborative cleaning modes may further include a second mode in which, among a plurality of areas, areas to be cleaned by the first and second cleaning robots are allocated respectively, and thus the first and second cleaning robots are set to perform cleaning of each allocated area.

The first robot cleaner and the second robot cleaner may share a map including a cleaning or traveling area for cleaning.

### Advantageous Effects of Invention

Since the second robot cleaner starts cleaning of the first area after the first robot cleaner has performed cleaning of the first area more than a predetermined standard, interference in their normal cleaning operations which results from simultaneous cleaning of the same area by the first and second robot cleaners can be reduced.

Since the second robot cleaner starts cleaning of the second area after the first robot cleaner has performed cleaning of the second area more than a predetermined standard, interference in their normal cleaning operations which results from simultaneous cleaning of the same area by the first and second robot cleaners can be reduced.

Wherein, in instances where the predetermined standard is adjusted to 100% or less, the interference can be reduced while shortening cleaning time taken by cleaning the whole area to be cleaned, and the interference can also be reduced to the maximum possible extent by adjusting the predetermined standard to 100%.

In addition, even if the first robot cleaner and the second robot cleaner perform cleaning of a first area and a second area sequentially, respectively, which are included in a plurality of areas which are divided from a region to be cleaned, and the first robot cleaner has performed cleaning of the second area more than a predetermined standard, and since cleaning of the second area is begun after the first robot cleaner has completed cleaning of the first area, cleaning of the whole area can be completed sequentially. Accordingly, an area of which cleaning has been completed already can be used by a user sooner.

In instances where the first robot cleaner may perform an operation for sucking foreign substances, and the second robot cleaner performs an operation for wet mopping, the problems caused by the fact that the floor on which the sucking of the foreign substances has been completed can be cleaned with a wet mop again, and that the floor on which the wet cleaning has already been done by the second robot cleaner can be contaminated again by the first robot cleaner can be resolved.

With the robot cleaner selection step and the mode selection step, a plurality of robot cleaners may be caused to do collaborative cleaning according to a user's personal taste or circumstances.

With the master robot selection step, a plurality of robot cleaners may be caused to do collaborative cleaning according to a user's personal taste or circumstances and perform effectively the cleaning operations by reducing some initial setting courses for collaborative cleaning.

### Brief Description of Drawings

The above and other objects, features and other advantages of the embodiments will be more clearly understood from the following detailed description taken in conjunction with the accompanying drawings, in which:
FIG. 1 is a perspective view illustrating a robot cleaner 100 and a docking station 200 on which the robot cleaner is docked according to an embodiment.
FIG. 2 is an elevation view illustrating the robot cleaner 100 viewed from an upper side according to an embodiment.
FIG. 3 is an elevation view illustrating the robot cleaner 100 viewed from the front according to an embodiment.
FIG. 4 is an elevation view illustrating the robot cleaner 100 viewed from a lower side according to an embodiment.
FIG. 5 is a block diagram illustrating a configuration in conjunction with control of the robot cleaner 100 according to an embodiment.
FIG. 6 is a conceptual diagram illustrating connecting a plurality of robot cleaners 100a and 100b and a mobile handset 300 with a wireless communication network according to an embodiment.
FIG. 7 is a conceptual diagram illustrating example communication paths in the network of FIG. 6 according to an embodiment.
FIG. 8 is a flow chart illustrating a method for controlling the plurality of robot cleaners according to an embodiment.
FIG. 9 is a flow chart illustrating a method for controlling the plurality of robot cleaners 100a and 100b according to a first exemplary embodiment.
FIG. 10 is a flow chart illustrating a method for controlling the plurality of robot cleaners 100a and 100b according to a second exemplary embodiment.
FIG. 11 is views illustrating a user interface. FIG. 11A shows an input display for executing a robot cleaner register step S10 in FIGS. 8 to 10. FIG 11B shows an input display for executing a collaborative cleaning selection step S20 in FIGS. 8 to 10 according to an embodiment.
FIG. 12 is views illustrating a user interface and shows an input display for executing a step for selecting a plurality of collaborative robot cleaners S30 in FIGS. 8 to 10 according to an embodiment.
FIG. 13 is a plan conceptual diagram illustrating an example of that a plurality of robot cleaners 100a and 100b are docked on a docking station 200a and 200b respectively according to an embodiment.
FIG. 14 is a view illustrating a user interface, and shows an input display for selecting a first mode in a collaborative cleaning mode selection step S30 of FIG. 8 according to an embodiment.
FIGS. 15A, 15B are plan conceptual diagrams illustrating a scenario of the movements for cleaning operations of a plurality of robot cleaners 100a and 100b of FIG. 13 when the first mode is selected according to an embodiment.
FIG. 16 is a view illustrating a user interface, and FIG. 16A illustrates an input display for selecting a second mode in a collaborative cleaning mode selection step S30 of FIG. 8 according to an embodiment. FIG. 16B illustrates an input display for selecting an area to be cleaned by the first robot cleaner 100a according to an embodiment, and FIG. 16C illustrates an input display for selecting an area to be cleaned by the second robot cleaner 100b according to an embodiment.
FIGS. 17 is a plan conceptual diagram illustrating a scenario of the movements for cleaning operations of a plurality of robot cleaners 100a and 100b of FIG. 13 when the second mode is selected according to an embodiment.
FIGS. 18 is a flow chart illustrating the flow of a cleaning step according to an exemplary embodiment A when the first mode is selected.
FIGS. 19 is a flow chart illustrating the flow of a cleaning step according to an exemplary embodiment B when the second mode is selected.

### Best Mode for Carrying out the Invention

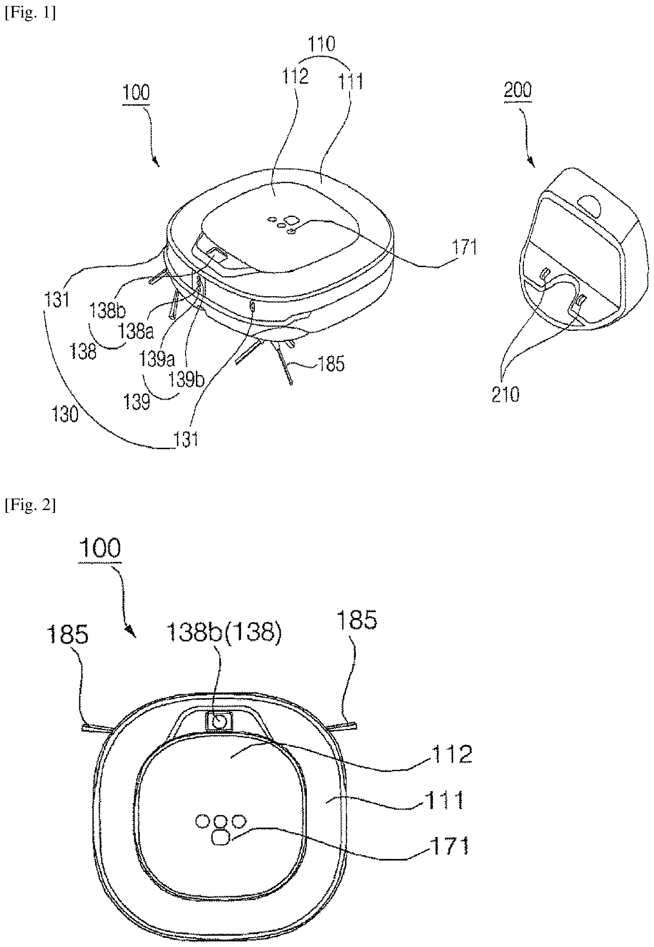

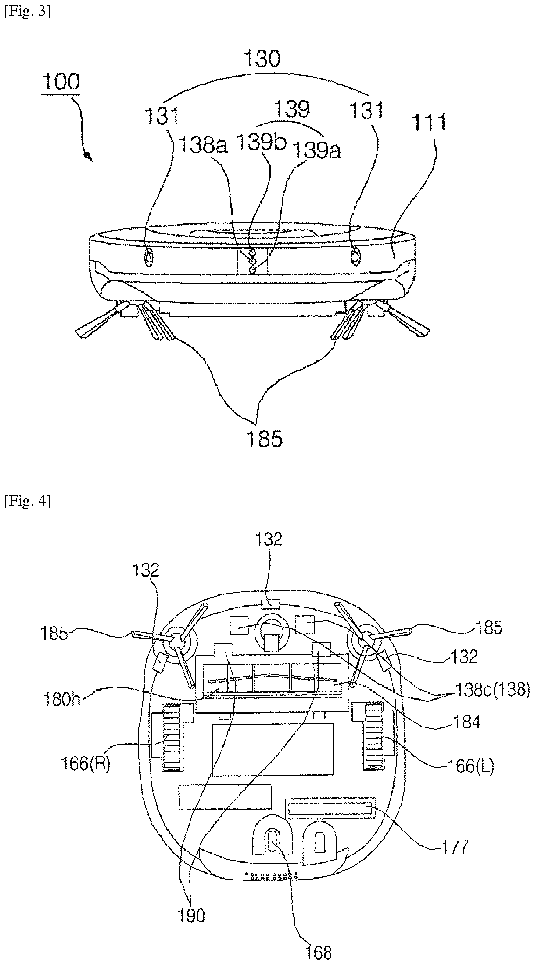

A moving robot 100 means a robot capable of autonomous moving by means of wheels and the like, such as a home assistant robot, a robot cleaner or the like. Hereinafter, referring to FIGS. 1 to 5, a robot cleaner 100 is described as example of the moving robot.

The robot cleaner 100 includes a main body 110.In the following, in order to describe each part of the main body 110, some definitions are given as follows. The terminology "front" refers to the primary direction of motion of the robot cleaner 10, and "back" is opposite to the front. An upper portion is defined as a portion disposed in a direction facing the ceiling in an area to be cleaned, and a bottom portion is defined as a portion disposed in a direction facing the floor in an area to be cleaned. A front portion is defined as a portion disposed in a traveling direction of the outer surface between the upper and bottom portions of the main body 110. A back portion is also defined as a portion disposed in a direction opposite to the front portion of the main body 110. The main body 110 may include a housing 111 in whose space each of parts, components, units, and the like of the robot cleaner 100 are disposed.

The robot cleaner 100 includes a sensing unit 130 for sensing in order to obtain information in a current state of the robot cleaner 100. The sensing unit 130 may perform a sensing task during the moving of the robot cleaner 100. The sensing unit 130 may detect circumstances near and a state of the robot cleaner 100.

The sensing unit 130 may detect information on a cleaning or traveling area for cleaning operations. The sensing unit 130 may detect obstacles, such as walls, furniture, cliffs or the like located in an area to be cleaned. The sensing unit 130 may detect a docking station 200. The sensing unit 130 may detect information on the ceiling. The robot cleaner 100 may perform mapping of a cleaning or traveling area for cleaning operations based on the information detected by the sensing unit 130.

The sensing unit 130 may include at least one of a distance measuring unit 131, a cliff sensor 132, an external signal detection unit, an obstacle detection unit, an image sensing unit 138, 3D sensors 138a, 139a and 139b and a docking detection unit.

The sensing unit 130 may include a distance measuring unit 131 detecting a distance to an object in the vicinity of the robot cleaner 100. The distance measuring unit 131 may be disposed at a front portion or a side portion of the main body 110. The distance measuring unit 131 may detect an object in the vicinity of the robot cleaner 100. The robot cleaner may include a plurality of distance measuring units 131.

In accordance with an embodiment, the distance measuring unit 131 may be an infrared ray sensor, an ultra sonic sensor, RF (Radio Frequency) sensor, a geomagnetic sensor, or the like which includes a light emitting unit and light receiving unit.The distance measuring unit 131 may be configured to use ultrasonic or infrared ray.The distance measuring unit 131 may be configured to use a camera. The distance measuring unit 131 may be configured to use at least two kinds of sensors or detection units.

The sensing unit 130 may include a cliff sensor 132 detecting an obstacle located on a floor of an area to be cleaned. The cliff sensor 132 may detect whether a cliff is presented on a floor.

The cliff sensor 132 may be disposed at a bottom portion of the robot cleaner 100.A plurality of cliff sensors 132 may be provided to the robot cleaner 100. The cliff sensor 132 may be disposed in the front direction at a bottom portion of the robot cleaner 100. The cliff sensor 132 may be disposed in the back direction at a bottom portion of the robot cleaner 100.

The cliff sensor 132 may be an infrared ray sensor, an ultrasonic sensor, a RF sensor, a position sensitive detector (PSD) sensor, or the like which includes a light emitting unit and a light receiving unit.In accordance with an embodiment, the cliff sensor may be the PSD sensor, or be configured with a plurality of sensors which are different kinds of sensors.The PSD sensor includes a light emitting unit which emits an infrared ray to an obstacle, and a light receiving unit which receives an infrared ray reflected from the obstacle.

The sensing unit 130 may include an obstacle detection unit which detects an impact which results from contacting an external object by the robot cleaner 100.

The sensing unit 130 may include an external signal detection unit which detects a signal from an external entity separate from the robot cleaner 100.The external signal detection unit may include at least one of an infrared ray sensor which detects an infrared ray signal from an external entity, an ultrasonic sensor which detects an ultrasonic signal from an external entity, and a RF sensor which detects a RF signal from an external entity.

The sensing unit 130 may include an image sensing unit 138 which detects an external scene.

The image sensing unit 138 may include a digital camera.The digital camera may include at least one optical lens, an image sensor, such as a CMOS image sensor, which is configured to include a pixel composed of multiple photodiodes and so on and provides an electric signal from light which passed through the optical lens, and a digital signal processor (DSP), which provides digital signals based on signals from the image sensor. The digital signal process can provide not only digital signals for a still image, but also digital signals for a moving image which includes several frames of image data.

The image sensing unit 138 may include a front image sensor 138a which detects a scene in a front direction of the robot cleaner 100. The front image sensor 138a may detect a scene of an obstacle or an object in vicinity of the robot cleaner 100, such as the docking station 200, or the like.

The image sensing unit 138 may include an upper image sensor 138b which detects a scene in an upper direction of the robot cleaner 100. The upper image sensor 138b may detect a scene of the ceiling or a lower surface of furniture disposed at the upper side of the robot cleaner 100, or the like.

The image sensing unit 138 may include an upper image sensor 138b which detects a scene in an upper direction of the robot cleaner 100. The upper image sensor 138b may detect a scene of the ceiling or a lower surface of furniture disposed at the upper side of the robot cleaner 100, or the like.

Moreover, the image sensing unit 138 may include a sensor which detects a scene in the side or back direction of the robot cleaner 100.

The sensing unit 130 may include three dimensional (3D) sensors 138a, 139a and 139b which detect 3D information on external circumstances.

The 3D sensors 138a, 139a and 139b may include 3D depth camera 138a which calculates a distance between the robot cleaner 100 and an object to be photographed.

In accordance with an embodiment, the 3D sensors 138a, 139a and 139b may include a pattern emitting unit 139 which emits a predetermined pattern of light to the front direction of main body 110, and a front image sensor 138a which obtains a scene in the front direction of the main body 1 10.The pattern emitting unit 139 may include a first pattern emitting unit 139a which emits a first pattern of light to a lower portion in the front direction of the main body 110, and a second pattern emitting unit 139b which emits a second pattern of light to an upper portion in the front direction of the main body 110. The front image sensor 138a may obtain a screen of an area to which the first and second patterns of lights emit.

The pattern emitting unit 139 may be configured to emit a pattern of infrared ray.In this case, the front image sensor 138a may measure a distance between each of the 3D sensors and an object to be photographed, by capturing a shape projected on the object to be photographed by the pattern of infrared ray.

The first and second patterns of lights may be emitted in a form of straight lines intersecting each other.The first and second patterns of lights may be emitted in a form of horizontal lines spaced up and down.

The second pattern emitting unit 139b may emit lasers in a form of a single straight line.In this case, a bottom laser is used to detect an obstacle positioned on the bottom or the floor, and a top laser is used to detect an obstacle positioned on the upper side, a middle laser positioned between the bottom and top lasers is used to detect an obstacle positioned on the middle position.

The sensing unit 130 may include a docking detection unit which detects whether docking is successfully performed. The docking detection of the docking detection unit may be performed by detecting contact between a corresponding terminal 190 and a charging terminal 210, by a sensor which is separately disposed from the corresponding terminal 190, or by detecting a charging state of a battery 177. A docking success state or a docking failure state may be detected by the docking detection unit.

The robot cleaner 100 includes a travel unit 160 configured to cause the main body 110 to move on a floor. The travel unit 160 may include at least one driving wheel 166 which causes the main body 110 to move. The travel unit 160 may include a driving motor. The driving wheel 66 may include a left and a right wheel 166(L) and 166(R) which are positioned on the left and right of the robot cleaner 100 respectively.

The left and right wheels 166(L) and 166(R) may be driven by one driving motor, or if necessary, by a left and right wheel driving motors respectively. The main body 110 may turn left or right by adjusting the rotation speeds of the left wheel 166(L) and the right wheel 166(R) differently.

The travel unit 160 may include an auxiliary wheel 168 which is not provided with a separate driving force and supplementarily supports the main body on a floor.

The robot cleaner 100 may include a traveling detection module 150 which detects motion of the robot cleaner 100. The traveling detection module 150 may configured to detect motion of the robot cleaner 100 by the travel unit 160.

The traveling detection module 150 may include an encoder which detects a traveling distance of the robot cleaner 100. The traveling detection module 150 may include an acceleration sensor which detects the acceleration of the robot cleaner 100. The traveling detection module 150 may include a gyro sensor which detects the rotation of the robot cleaner 100.

A controller 140 may obtain information on a traveling route of the robot cleaner 100 which results from detecting of the traveling detection module 150.In accordance with an embodiment, the controller 140 may obtain information on a traveling velocity, a traveling distance, or the like of the robot cleaner 100 in the current or past based on a rotation speed which results from the encoder.In accordance with an embodiment, according to the rotation direction of the driving wheels 166(L) and 166(R), information on a process of direction turning in the current or past can be obtained.

The robot cleaner 100 may include an operation mode unit 180 which performs a predetermined function.In accordance with an embodiment, the operation mode unit 180 may be configured to perform housework operations, such as cleaning including wiping, suction cleaning, mopping, or the like, washing dishes, cooking, laundry, garbage disposal, and the like.As another example, the operation mode unit 180 may be configured to perform an operation such as finding an object or removing a worm.Although the operation mode unit 180 according to some embodiments is described for cleaning operation, the operation mode unit 180 may include other several operations.

The robot cleaner 100 can perform cleaning of a floor according to the operation mode unit 180 while moving a cleaning or traveling area for cleaning operations. The operation mode unit 180 can perform sucking of foreign substances.

The operation mode unit 180 can perform mopping with a dry or wet mop.The operation mode unit 180 may include a suction apparatus for sucking foreign substances, a brush for wiping, a dust container for storing dust or foreign substances thatresult from sucking or wiping, and/or a mop for mopping.

A suction unit 180h by which sucking of air is performed is mounted at a bottom portion of the main body 110. A suction apparatus for providing a suction force for sucking air and a dust container for collecting dust sucked with air may be disposed in the main body 110.

An opening for inserting or detaching of the dust container may be defined in a housing 111, and a dust container cover 112 for closing or opening of the opening may be rotatably connected to housing 111.

The operation mode unit 180 may include a main brush 184 which has a lot of hairs, bristles, or thin pieces of plastic which are exposed by the suction unit 180h and have a roll type, and an auxiliary brush 185 which is positioned at the bottom portion in the front direction of the main body 110 and has a brush composed of multiple blades which are radially extended.Dust can be removed from a floor by the rotation of the main brush 184, and/or the auxiliary brush 185, collected into the dust container by sucking of the suction unit 180h.

The robot cleaner 100 may include a corresponding terminal 190 for charging of a battery 177 when docking on a docking station 200. The corresponding terminal 190 is positioned at a portion of the robot cleaner 100 at which the contact with a charging terminal 210 can be provided in a state where the robot cleaner is successfully docked on the docking station 200.In accordance with an embodiment, a set of corresponding terminals 190 may be disposed at the bottom portion of the main body 110.

The robot cleaner 100 may include an input unit 171 for inputting information. Several instructions including power-on or power-off can be input by the input unit 171 into the robot cleaner 100. The input unit 171 may include a button, a key or a touch-sensitive display, or the like. The input unit 171 may include a mike or a voice recognition unit for inputting an input by voice recognition.

The robot cleaner 100 may include an output unit 173 for outputting information. The output unit 173 can provide several predetermined information to a user. The output unit 173 may include a speaker and/or a display unit.

The robot cleaner 100 may include a communication unit 175 for transmitting information or signals to or receiving information or signals from an external device or network. The communication unit 175 can communicate wirelessly or through a wired connection or satellite with a mobile handset or other devices which may be located within a certain area.

The communication unit 175 may be configured to communicate with a mobile handset 300, a wireless router 400, and/or a server 500.The communication unit 175 of the first robot cleaner 100a may be configured to cause the first robot cleaner 100a to communicate with the communication unit 175 of a second robot cleaner 100b. The communication unit 175 may communicate with the mobile handset 300 and/or other devices including a robot cleaner located within a certain area.

The communication unit 175 may receive various instructions or control signals from the mobile handset 300 and/or other devices. The communication unit 175 may transmit information to the mobile handset 300 or other devices by which the information can be outputted to external devices. The mobile handset 300 can output or display information or data corresponding to the received information.

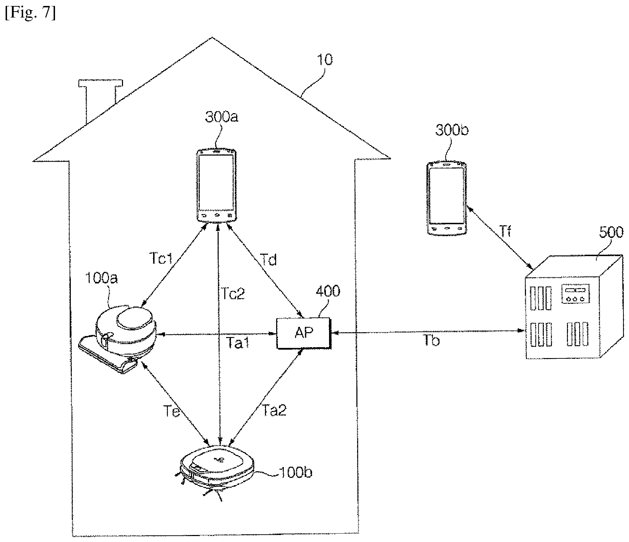

Referring to Ta1 and Ta2 of FIG. 7, the communication unit 175 can communicate with a wireless router 400.Referring to Ta1 and Ta2 of FIG. 7, the communication unit 175 can communicate with a mobile handset 300a.The communication unit 175 can directly wirelessly communicate with a server 500.In accordance with an embodiment, the communication unit 175 can perform wireless communication based on wireless communication technology, such as IEEE 802.11 WLAN, IEEE 802.15 WPAN, UWB, Wi-Fi, Zigbee, Z-wave, Blue-Tooth, or the like. The selection of wireless communication technology of the communication unit 175 is depending on what wireless communication technology the counterpart terminal, device or apparatus is adapted to.

State information which results from the detection of the sensing unit 130 may be transmitted to the robot cleaners or other terminals, devices, apparatus, servers, or the like by the communication unit 175. The robot cleaners 100a and 100b can receive information by the communication unit 175 via the communication network. The robot cleaner 100 may be controlled based on this received information.

The robot cleaner 100 may include a battery 177 for supply electric power to several parts or units thereof. The battery 177 supplies electric power for performing some operations according to operation information selected by robot cleaner 100. The battery 177 is disposed in the main body 110. The battery may be removably attached to the main body 110.

The battery 177 is configured to be rechargeable. The battery 177 can be charged in a case where the robot cleaner 100 is docked on the docking station 200, and a charging terminal 210 contacts the corresponding terminal 190. In a case where an effective level of battery charge equals to or below a threshold value, the robot cleaner may start a docking mode for charging the battery 177. In this case, the robot cleaner 100 returns to the docking station 200.

Referring back to FIGS. 1 to 5, the robot cleaner 100 includes a storage unit 179 for storing various kinds of information. The storage unit 179 may include a volatile or nonvolatile storing element.

The storage unit 179 may store a map for an area to be cleaned.The map may be provided by the mobile handset which can exchange information with the robot cleaner 100 through the communication unit 175 thereof, or created by self-learning of the robot cleaner 100. In the former case, the mobile handset may be a remote controller, a personal digital assistant (PDA), a laptop computer, smartphone, tablet, or the like in which an application for setting up a map may be installed.

In accordance with an embodiment, a plurality of robot cleaners 100a and 100b may share the map with each other.The plurality of robot cleaners 100a and 100b may transmit information related to the map to or receive it from each other through the communication unit 175.As an alternative embodiment, the plurality of robot cleaners 100a and 100b may store the map in their own storage units respectively, and thus may not share it with each other.

The robot cleaner 100 may include a controller 140 by which processing and determining may be performed based on various collected information, such as recognizing of the current location, mapping of an area to be cleaned. The controller 140 may control overall operations of the robot cleaner 100 by controlling parts or units thereof. The controller 140 may be configured to perform mapping of the cleaning or traveling area for cleaning operations based on the screen information resulted from the detection of the area, and recognize the current location of the robot cleaner on the map.That is, the controller 140 may be configured to perform a simultaneous localization and mapping function (SLAM).

The controller 140 may perform processing based on the information received from the input unit 171. The controller 140 may perform processing based on the information received from the communication unit 175. The controller 140 may perform processing based on the information received from the sensing unit 130.

The controller 140 may be configured to cause the communication unit 175 to transmit information. The controller 140 may control the output of the output unit 173. The controller 140 may control the driving of the travel unit 160. The controller 140 may control the operation of the operation mode unit 180

Moreover, the docking station 200 may include a charging terminal 210 which is configured to contact with the corresponding terminal 190 in a state where the robot cleaner is successfully docked on the docking station 200.The docking station may include a signal transmitting unit which transmits a guide or alert signal. The docking station 200 may be configured to be positioned on a floor.

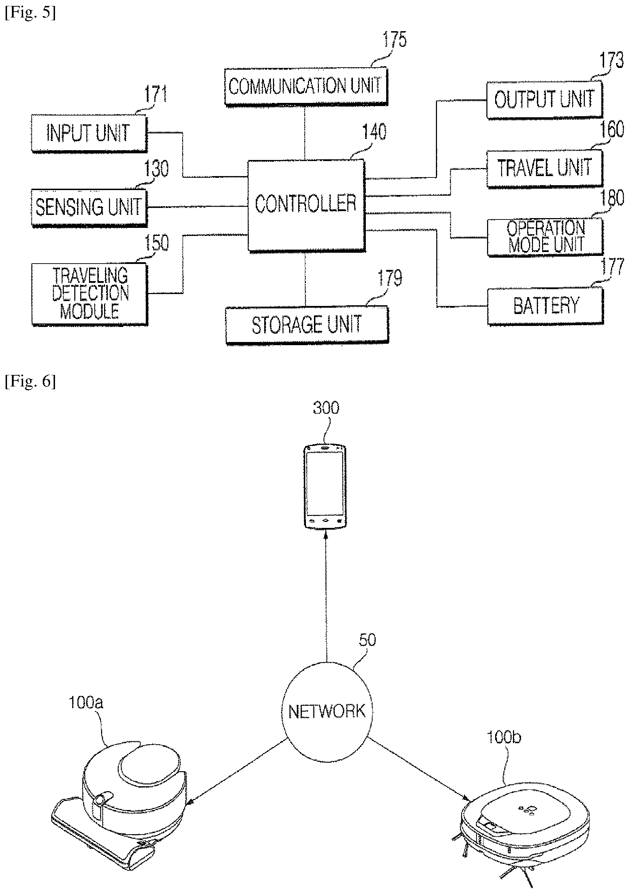

Referring to FIG. 6, one robot cleaner 100a may communicate with another robot cleaner 100b via a communication network. Each of the robot cleaners 100a and 100b may communicate with the mobile handset 300 via a communication network.

The communication unit 175 communicates via a predetermined communication network with other devices, such as other robot cleaners or a mobile handset.In this case, a predetermined communication network means a network, directly or indirectly, connected to each other, wirelessly or through a wired connection. That is, the communication of the communication unit 175 with other devices via a predetermined communication network includes not only that the communication unit 175 directly communicates with them, but also that it indirectly communicates with them via a wireless router 400 or the like.

The network may be established based on Bluetooth, Ultra-WideBand (UWB), Ethernet, ZigBee, Z-wave, Near Field Communication (NFC), Wireless-Fidelity (Wi-Fi), Wi-Fi Direct, Wireless USB(Wireless Universal Serial Bus), and the like.

FIG. 7 is a conceptual diagram illustrating example communication paths via the network. The plurality of robot cleaners 100a and 100b, the wireless router 400, the server 500 and the mobile handsets 300a, 300b may be connected to the network, and thus they can transmit information to and receive it from each other.In this case, the plurality of robot cleaners 100a and 100b, the wireless router 400, the mobile handset 300a, or the like may be located inside a house or a building 10. The server 500 may be located not only inside a building 10, but also outside a building 10 which may be connected to a wide range communication network.

The wireless router 400 and the server 500 may include a communication module which is accessible to a network based on a communication protocol or standard. Thus, the communication units 175 of robot cleaners 100a and 100b may be connected to the network based on the communication protocol or standard.

The robot cleaners 100a and 100b may exchange data with the server 500 via the network. The robot cleaners 100a, 100b may exchange data with the wireless router 400 wirelessly or through a wired connection. As a result of this communication, the robot cleaners 100a and 100b may exchange data with the server 500.

Furthermore, the robot cleaners 100a and 100b may exchange data with the mobile handsets 300a and 300b. The robot cleaners 100a and 100b may exchange data with the wireless router 400 wirelessly or through a wired connection. As a result of this communication, the robot cleaners 100a and 100b may exchange data with the mobile handsets 300a and 300b without the wireless router 400 by the Bluetooth communication, or the like.

Referring to Ta1 and Ta2 of FIG. 7, each of the wireless routers 400 may be connected to the plurality of robot cleaners 100a and 100b wirelessly.Referring to Tb of FIG. 7, the wireless router 400 may be connected to the server 8 wirelessly or through a wired connection. Referring to Td of FIG. 7, the wireless router 400 may be connected to the mobile handset 300a wirelessly.

Furthermore, the wireless router 400 may perform a data communication wirelessly with some electronic devices located within a predetermined area by allocating wireless communication channels to them based on a prescribed protocol or standard and using the channels. Wherein, the prescribed protocol or standard may include the Wi-Fi communication.

The wireless router 400 may communicate with the plurality of robot cleaners 100a and 100b located within a predetermined area. The wireless router 400 may communicate with the mobile handset 300a located within a predetermined area. The wireless router 400 may communicate with the server 500.

The server 500 may be connected to the wireless router 400 or the like via Internet.A mobile handset 300b connected to the robot cleaner via Internet may communicate with the server 500. The mobile handset 300b may be a mobile handset, such as personal computer (PC), a smartphone, or the like.

Referring to Tf of FIG. 7, the server 500 may be directly wirelessly connected to the mobile handset 300b. The server 5oo can directly wirelessly communicate with the robot cleaner 100.

The server 500 includes a processor capable of processing of a program. The function of the server 500 can be performed by a server or central computer in cloud computing, or a user's computer or a mobile handset.In accordance with an embodiment, the server 500 may perform machine learning and/or data mining. The server 500 may perform leaning with the collected information.

Referring to Td, Ta1 and Ta2 of FIG. 7, the mobile handset 300a may be connected to the wireless router 400 via a short-range communication, such as Wi-Fi, or the like. In this case, the mobile handsets 300a and 300b may transmit information to and receive it from the plurality of robot cleaners 100a and 100b via the wireless router 400.

Referring to Tc1 and Tc2 of FIG. 7, the mobile handset 300a may be directly wirelessly connected to the robot cleaner 100 via a short-range communication, such as Bluetooth, or the like. In this case, the mobile handset 300a may transmit information to and receive it from the plurality of robot cleaners 100a and 100b directly.

Referring to Te of FIG. 7, the plurality of robot cleaners 100a and 100b may be directly connected to each other via a short-range communication, such as Bluetooth, or the like. In this case, the plurality of robot cleaners 100a and 100b may directly transmit information to and receive it from each other.

Referring to Ta1 and Ta2 of FIG. 7, the plurality of robot cleaners 100a and 100b may transmit information to and receive it from each other via the wireless router 400.

Furthermore, the network may further include a gateway.The robot cleaner 100 and the wireless router 400 may be connected to each other through a gateway.The gateway may communicate with the robot cleaner 100 wirelessly.The gateway may communicate with the wireless router 4100.In accordance with an embodiment, the communication between the gateway and the wireless router 400 may be performed based on Ethernet or Wi-Fi.

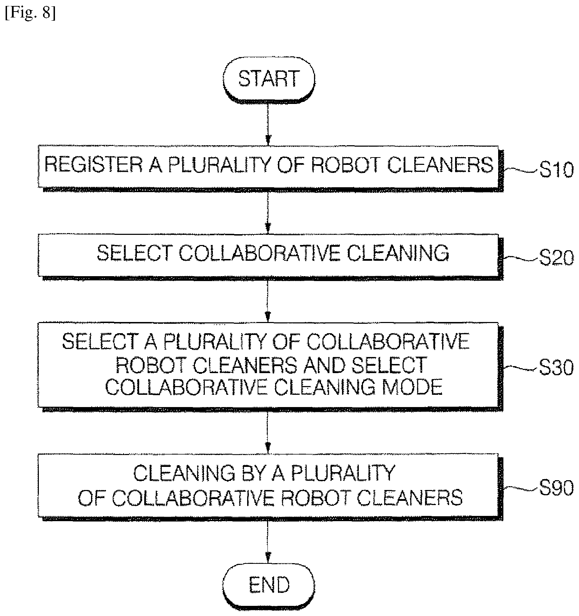

Hereinafter, Referring to FIG. 8 to 19, according to some embodiments, a control method and system for controlling the plurality of robot cleaners will be described. In accordance with an embodiment, the control method may be performed by the controller 140 only, the controller 140 and the mobile handset, or the controller 140 and the server 500.The control methods for implementing of various embodiments of the invention may be performed by computer programs, and thus these computer programs are included within the scope of the invention. In addition, a machine-readable medium the computer programs, such as HDD(Hard Disk Drive), SSD(Solid State Disk), SDD(Silicon Disk Drive), ROM, RAM, CD-ROM, a magnetic tape, a floppy disk, an optical data storage device, the other types of storage mediums presented herein, and combinations thereof is also included within the scope of the invention.Wherein the machine-readable medium means a medium which is readable by a computer. Exemplary Embodiments of the invention may include a system having the hardware and software required for operating of the robot cleaner.

In some embodiments, some functions or features described in each step of the embodiments may possibly be occurred out of order. In accordance with an embodiment, two consecutive steps may be substantially performed at the same time, or occasionally performed in reverse order according to an operated function.

Referring to FIG. 8, the control method may include a step for registering a plurality of robot cleaners S10 for cleaning.The control method, after the robot cleaner register step 10 is performed, may include a step for selecting a collaborative cleaning mode by a user S20. The control method, after the collaborative cleaning mode is selected, may include a step for selecting a plurality of collaborative robot cleaners for a collaborative cleaning, and for selecting one of a plurality of collaborative cleaning modes S30.The control method may include a step for performing cleaning operations by the plurality of robot cleaners S90.

In the robot cleaner register stepS10, the plurality of robot cleaners 100a and 100b may be registered with the mobile handset 300.The plurality of robot cleaners 100a and 100b may be registered with the server 500.

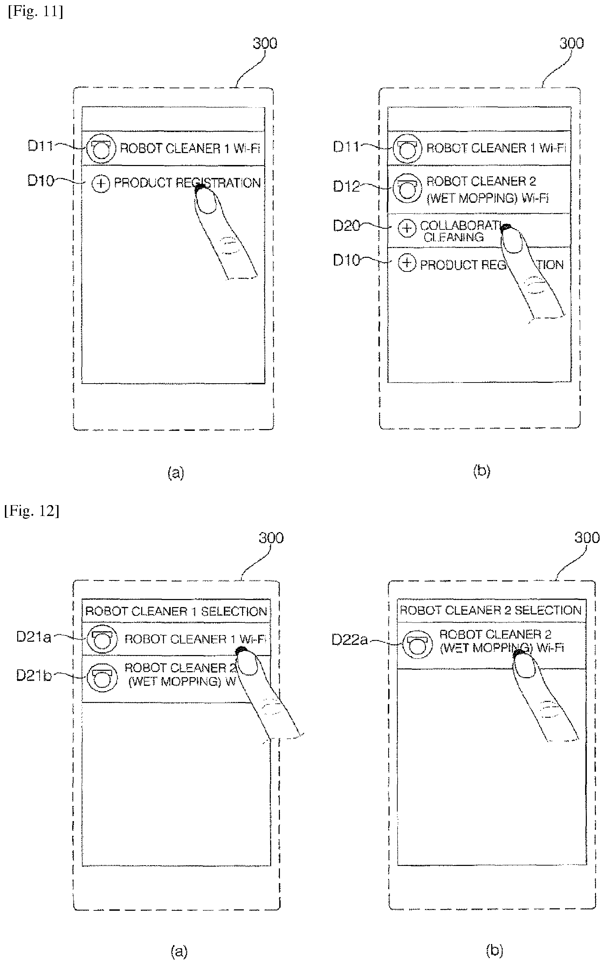

Referring to FIG. 11(a), a user may register a robot cleaner which can be connected to a communication network by touching a button, a key, a menu, or the like for registering robot cleaners on a display screen of the mobile handset 300.In a case where the robot cleaner register step is performed, the registered robot cleaners D11 and D12 may be displayed on the display screen of the mobile handset 300.

In the collaborative cleaning selection step S20, a user may select a collaborative cleaning mode by the mobile handset 300.Referring to FIG. 11(B), a user may instruct the plurality of registered robot cleaners to start collaborative cleaning operations by touching a button, a key, a menu, or the like for starting the collaborative cleaning operations on a display screen of the mobile handset 300.

The collaborative robot cleaner selection step S30 may include a step for selecting a plurality of collaborative robot cleaners for a collaborative cleaning from the plurality of the registered robot cleaners S30.Referring to FIG. 12(a), in the collaborative robot cleaner selection step S30, a user may select a first robot cleaner 100a from a plurality of selection items D21a and D21b displayed on a display screen of the mobile handset 300.In accordance with an embodiment, a user may select a first selection item D21a corresponding to a robot cleaner 1 as a first robot cleaner 100a.Furthermore, referring to FIG. 12(b), in the collaborative robot cleaner selection step S30, a user may select a second robot cleaner 100b from at least one selection item D22a displayed on a display screen of the mobile handset 300.In accordance with an embodiment, a user may select a second selection item D21b corresponding to a wet mop cleaning as the second robot cleaner 100b.In accordance with a second exemplary embodiment which will be described below, a user can select a master robot cleaner only from a plurality of collaborative robot cleaners.

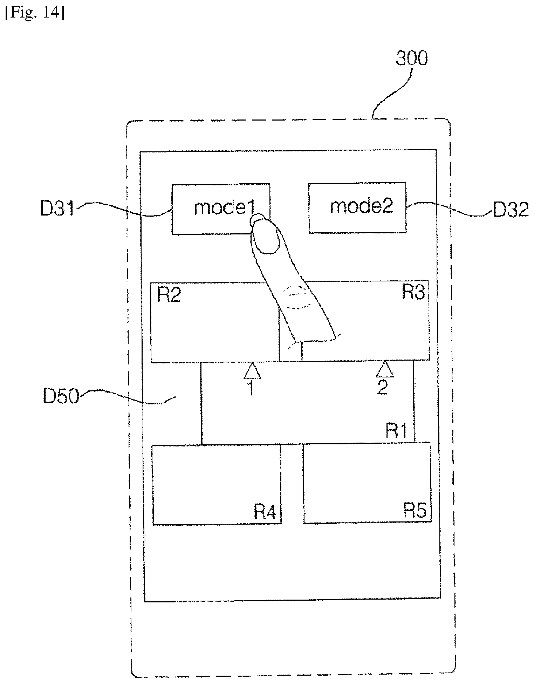

The collaborative robot cleaner selection step S30 may include a mode selection step in which one of a plurality of collaborative cleaning modes is selected S30.Referring to FIG. 14, a plurality of selection items D31 and D32 corresponding to each of the plurality of collaborative cleaning modes are displayed on a display screen of the mobile handset.A user may select one item corresponding to a collaborative cleaning mode for the user to select from a plurality of selection items D31 and D32.

In the cleaning operation step S90, the plurality of collaborative robot cleaners 100a and 100b selected at the robot cleaner selecting step S30 perform the cleaning operations. In the cleaning operation step S90, the plurality of robot cleaner 100a and 100b perform cleaning operations according to a collaborative cleaning mode selected at the collaborative cleaning mode selection step S30.A description of the cleaning steps according to each cleaning mode will be given below.

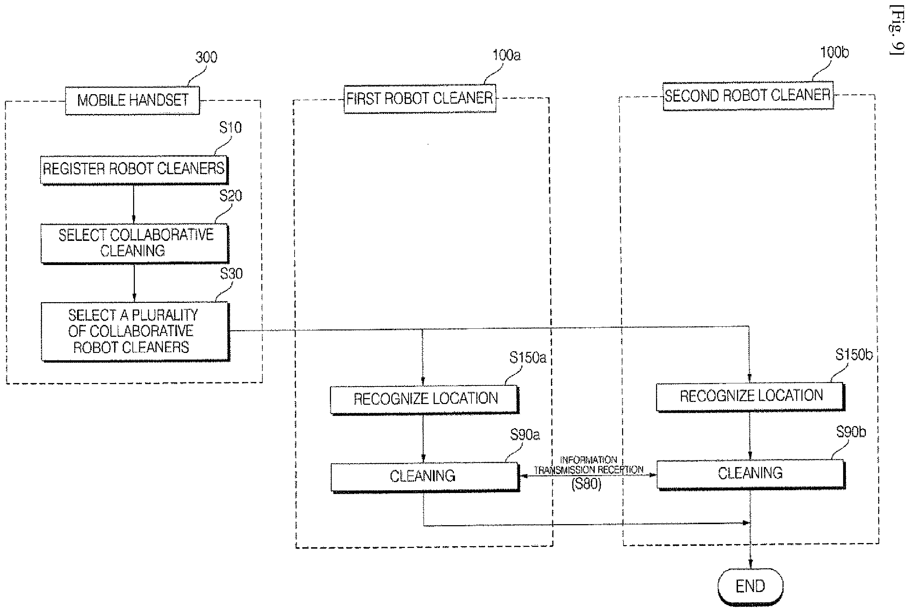

Referring to FIG. 9, in accordance with a first exemplary embodiment, the first and second robot cleaners from the plurality of the registered robot cleaners are selected at the collaborative robot cleaner selection step S30.The first and second robot cleaners 100a and 100b means robot cleaners selected to perform a collaborative cleaning.In a case where the collaborative robot cleaner selection step S30 is performed, if the first and second robot cleaners 100a and 100b receive an instruction from the mobile handset 300 via a communication network, the first and second robot cleaners 100a and 100b identify their locations on the map by analyzing the current states respectively S150a and S150b. The first robot cleaner 100a preforms the collaborative cleaning operations with the second robot cleaner 100b after its own location by the first robot cleaner 100a is identified. The second robot cleaner 100b preforms the collaborative cleaning operations with the first robot cleaner 100a after its own location by the second robot cleaner 100b is identified. The first and second robot cleaners 100a and 100b exchange information S80 during the cleaning operations S90a and S90b.

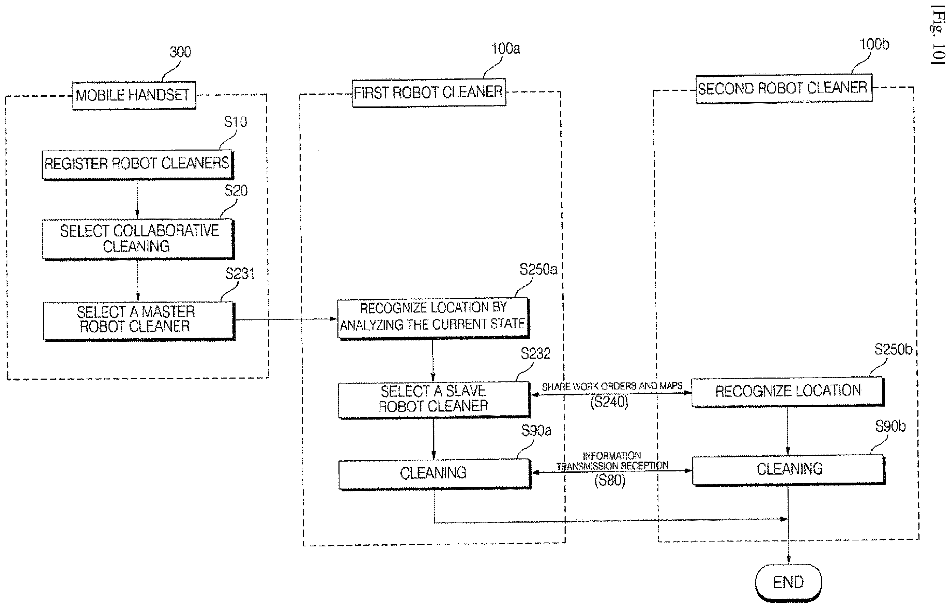

In the second exemplary embodiment with reference to FIG. 10, a master robot cleaner selection step S231 for selecting any one robot cleaner which is operated as a master robot cleaner from the plurality of the registered robot cleaners 100a and 100b is performed.

The master robot cleaner may be any one of the first and second robot cleaners 100a and 100b.The master robot cleaner which will be described below may be the other of the first and second robot cleaners 100a and 100b.In some embodiments, a description is given for a case where the first and second robot cleaners 100a and 100b are a master and slavery robot cleaners respectively, but not limited to this.

In the second exemplary embodiment, a user may select only the master robot cleaner 100a, and therefore the others may not be selected.The master robot cleaner selection step S231 may be performed after the robot cleaner register step S10 and the collaborative cleaning selection step S20 are performed. In a case where the master robot cleaner selection step is performed S231, if the master robot cleaner 100a receives an instruction from the mobile handset 300 via a communication network, the master robot cleaner 100a identifies its own locations on the map by analyzing the current state 250a.The master robot cleaner 100a selects the slavery robot cleaner 100b S232 after its own location is identified S250a.Regarding the selection of the slavery robot cleaner 100b by the master robot cleaner 100a, the master robot cleaner 100a may autonomously select any one of the plurality of the registered robot cleaners.In accordance with an embodiment, regarding the selection of the slavery robot cleaner 100b by the master robot cleaner 100a, the master robot cleaner 100a may select any one located closest thereto from the plurality of the registered robot cleaners as a slavery robot cleaner.In accordance with another embodiment, regarding the selection of the slavery robot cleaner 100b by the master robot cleaner 100a S232, the master robot cleaner100a may select any one located closest to an area to be cleaned as a secondary cleaning from the plurality of the registered robot cleaners as a slavery robot cleaner.

In the second exemplary embodiment, in a case where a slave robot cleaner 100b is selected, the master robot cleaner selected at the master robot cleaner selection step S231 may instruct the slave robot cleaner 100b to perform cleaning of an area allocated for cleaning via the communication network S240.In this case S240, the master robot cleaner S231 may transmit a map of the cleaning or traveling area for cleaning operations which is stored in its own storage unit to the slavery robot cleaner 100b via the communication network. Thereafter, the robot cleaner 100b identifies its own location by analyzing its current state S250b.

In the second exemplary embodiment, in a case where the slave robot cleaner 100b is selected, the master robot cleaner 100a performs collaborative cleaning operations with the slave robot cleaner 100b S90a.The slave robot cleaner 100b preforms the collaborative cleaning operations with the master robot cleaner 100a S90b after identifying its own location S250b.The first and second robot cleaners 100a and 100b exchange information S80 during the cleaning operations S90a and S90b.

The master robot cleaner 100a controls the cleaning operations of the slavery robot cleaner 100b.The master robot cleaner 100a may control in which area the slave robot cleaner 100b will perform cleaning operations.The master robot cleaner 100a may control when the slave robot cleaner 100b will perform cleaning operations.The master robot cleaner 100a may cause the slavery robot cleaner 100b to travel for cleaning operations in a manner following the master robot cleaner 100a.Wherein, the cleaning operations by the slave robot cleaner 100b at the master robot cleaner selection step S231 may be controlled by instruction signals from the master robot cleaner 1001 via the communication network.

Furthermore, the first and second robot cleaners 100a and 100b may communicate to each other and thus share predetermined information. The first and second robot cleaners 100a and 100b may share information on the degree to which cleaning of each allocated area to be cleaned is performed.

In accordance with an embodiment, the first robot cleaner 100a and the second robot cleaner 100b may share a map including a cleaning or traveling area for cleaning.The first robot cleaner 100a and the second robot cleaner 100b may be controlled based on a map which is stored in any one of them, the mobile handset 300, or the server 500.

In accordance with another embodiment, the first robot cleaner 100a and the second robot cleaner 100b may be controlled based on their respective maps without sharing of the map. Any location on the map stored in the mobile handset 300 or the server 500 may be matched a location on the map of the first robot cleaner 100a as well as the second robot cleaner 100b, and thus, even if the first and second robot cleaners 100a and 100b have different maps from each other, they may be controlled based on the map stored in the mobile handset 300 or the server 500.

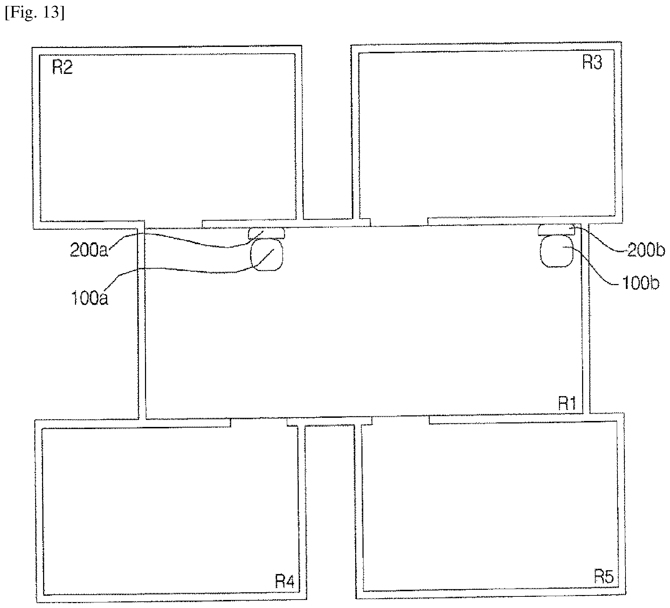

FIG. 13 is a plan conceptual diagram illustrating a cleaning or traveling area for cleaning operations of that a plurality of robot cleaners 100a and 100b.Specifically, in instances where the robot cleaner 100 is not provided the map for cleaning operations as in the initial traveling, the robot cleaner 100 may generate a map based on information on wall following and/or the detection of the sensing unit 130 while traveling the cleaning or traveling area. The robot cleaner 100 may divide the generated map into a plurality of areas R1, R2, R3, R4 and R5.The cleaning or traveling area for cleaning operations may be divided into a plurality of areas R1, R2, R3, R4 and R5 according a predetermined algorithm.

In accordance with an embodiment, a movement trajectory that is passed by the robot cleaner 100 each time that it travels a predetermined distance may be grouped into at least one area.

In accordance with another embodiment, a plurality of areas may be divided based on a shape of the cleaning or traveling area for cleaning operations.

Specifically, the robot cleaner 100 may discern the plurality of areas by recognizing a wall in each room, an openable door, or the like, located in the cleaning or traveling area.

In accordance with another embodiment, the cleaning or traveling area may be divided into a plurality of areas, based on the length, width, area, or the like of the divided area. Specifically, the cleaning or traveling area may be divided into the plurality of areas, based on a predetermined length, width, area, or the like.

In accordance with some embodiments, each of the plurality of areas of the cleaning or traveling area for cleaning operations is described as being one of actual rooms to be cleaned, but not limited to this, therefore the cleaning or traveling area for cleaning operations may be divided into a plurality of areas with the embodiments or examples described above, or any other available method.

The cleaning or traveling area for cleaning operations may be divided into a first to a p area.That is, the number of the plurality of areas may be p. Wherein, p is a natural number of 2 or more.Referring to FIG. 13, the number of the plurality of areas may be a total of 5.The plurality of areas may include a first and a second area.The first and second areas may be two areas arbitrarily selected from a plurality of areas.Hereinafter, the first and second areas R1 and R2 of FIG. 13 are described as an example of the first and second areas.

Referring to FIGS. 14 to 15b, in the collaborative cleaning mode selection step S30, the step of a first mode cleaning is described which is performed in a case where a first mode (mode 1) from the plurality of collaborative cleaning modes is selected. Wherein, a description is given in which it is assume that the first and second robot cleaners 100a and 100b as the collaborative robot cleaners are selected.

The first mode is pre-set to perform the following the first mode cleaning step.In the first mode cleaning step, the first robot cleaner 100a sequentially performs cleaning of a first area R1 and a second area R2.In the first mode cleaning step, the second robot cleaner 100b sequentially performs cleaning of a first area R1 and a second area R2.In the first mode cleaning step, the first and second robot cleaners 100a and 100b sequentially perform cleaning of a first to a p area which are divided from a region to be cleaned.

In the first mode cleaning step, the second robot cleaner 100b starts cleaning of the first area R1 in a case where a condition of starting a first cleaning is satisfied after the first robot cleaner 100a has performed cleaning of the first area R1.The condition of starting the first cleaning may be pre-set to be satisfied if the first robot cleaner 100a performs cleaning of the first area R1 more than a predetermined standard.

Furthermore, in the first mode cleaning step, the second robot cleaner 100b starts cleaning of the second area R2 in a case where a condition of starting a second cleaning is satisfied after the first robot cleaner 100a has performed cleaning of the second area R2.The condition of starting the second cleaning may include a A condition which is pre-set to be satisfied if the first robot cleaner100a preforms cleaning of the second area R2 more than a predetermined standard. Furthermore, the condition of starting the second cleaning may include a B condition which is pre-set to be satisfied if the first robot cleaner100a complete cleaning of the first area R1.In a case where all of the A and B conditions are satisfied, the condition of starting the second cleaning may be pre-set to be satisfied.

In a case where n is an arbitrary natural number of 2 or more and P or less, in the first mode cleaning step, the second robot cleaner 100b starts cleaning of the n area if a condition of starting a predetermined n cleaning is satisfied after the first robot cleaner 100a has performed cleaning of the n area.The condition of starting the n cleaning may include a An condition which is pre-set to be satisfied if the first robot cleaner100a preforms cleaning of the n area more than a predetermined standard.Furthermore, the condition of starting the second cleaning may include a Bn condition which is pre-set to be satisfied if the first robot cleaner100a complete cleaning of the n-1 area.In a case where all of the An and Bn conditions are satisfied, the condition of starting the n cleaning may be pre-set to be satisfied.

In the first mode cleaning step, the second robot cleaner may start cleaning of the first area R1 after the first robot cleaner R1 has performed clean operations in the first area more than a predetermined standard.

In the first mode cleaning step, the second robot cleaner may start cleaning of the second area R2 after the first robot cleaner 100a has performed clean operations in the second area R2 more than a predetermined standard. Furthermore, in the first mode cleaning step, the second robot cleaner may start cleaning of the second area R2 after cleaning of the first area R1 has been completed.

In the first mode cleaning step, the second robot cleaner 100b may start cleaning of the n area after the first robot cleaner 100a has performed clean operations in the n area more than a predetermined standard. Wherein, n is an arbitrary natural number of 1 or more and P or less.Furthermore, in a case where n is 2 or more, in the first mode cleaning step, the second robot cleaner100b may start cleaning of the n area after cleaning of the n-1 area has been completed.

The predetermined standard may be pre-set to a specific value within 50% to 100%. In accordance with an embodiment, the predetermined standard may be pre-set to 0%, 90%, 99%, or the like.

In accordance with an embodiment, in a case where the robot cleaner 100 completes traveling over a certain area according the predetermined standard while moving in a zigzag pattern, it may be determined that the robot cleaner 100 has performed cleaning of the area more than the predetermined standard.

The predetermined standard may be pre-set to 100% so that the second robot cleaner100b starts cleaning of the first area R1 after the first robot cleaner 100a has completed cleaning of the first area R1.Specifically, in the first mode cleaning step, the second robot cleaner 100b may start cleaning of the first area R1 after the first robot cleaner 100a has completed clean operations in the first area R1.In the first mode cleaning step, the second robot cleaner 100b may start cleaning of the second area R2 after the first robot cleaner 100a has completed clean operations in the second area R2.In the first mode cleaning step, the second robot cleaner 100b may start cleaning of the n area after the first robot cleaner 100a has completed clean operations in the n area.

The predetermined standard for completing the cleaning of any one area by any one robot cleaner 100 may be pre-set. In accordance with an embodiment, in a case where the robot cleaner 100 completes the traveling over any one specific area to be cleaned while moving in a zigzag pattern, it may be determined that the robot cleaner 100 has completed cleaning of the specific area.

By the performing of the first mode cleaning step, interference in their normal cleaning operations which results from simultaneous cleaning of the same area by the first and second robot cleaners 100a and 100b can be prevented.

Preferably, in the first mode cleaning step, the first robot cleaner 100a may perform an operation for sucking foreign substances, and the second robot cleaner performs an operation for wet mopping. Accordingly, the problems caused by the fact that the floor on which the sucking of the foreign substances has been completed can be cleaned with a wet mop again, and that the floor on which the wet cleaning has already been done by the second robot cleaner can be contaminated again by the first robot cleaner can be resolved.

In accordance with an embodiment, a presetting by which a robot cleaner which performs only the sucking of the foreign substances can be selected as the first robot cleaner 100 by a user may be provided. In accordance with an embodiment, a presetting by which a robot cleaner which performs only the wet mopping can be selected as the second robot cleaner 100 by a user may be provided.A presetting by which a user does not need to select the first and second robot cleaners 100a and 100b at the time of selecting a collaborative cleaning mode may be provided by registering for cleaning of the first robot cleaner 100a and/or the second robot cleaner 100b at the time of registering a robot cleaner.

One scenario of the first mode cleaning is described below.

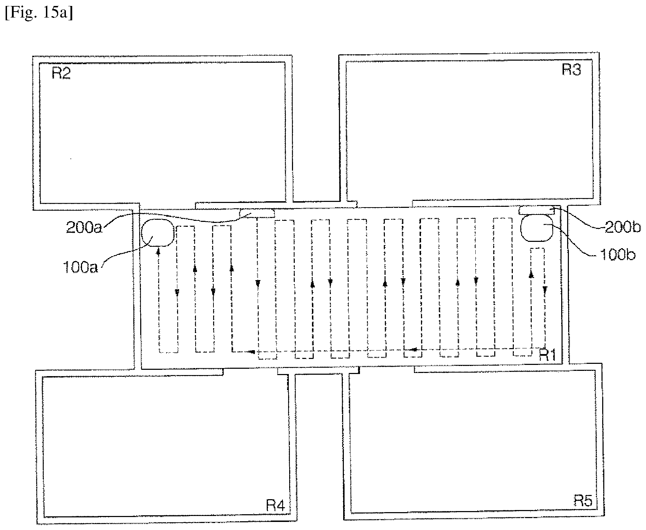

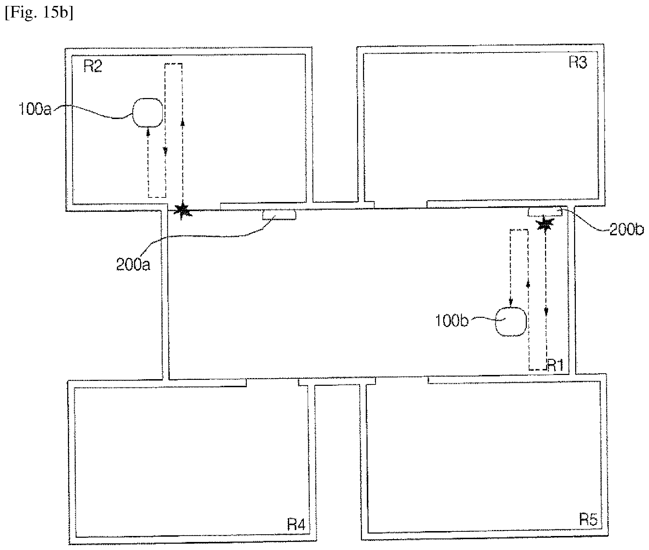

Referring to FIG. 15A, in a case where the first mode cleaning is started, the first robot cleaner 100a is departed from the docking station 200a, and performs cleaning operations in the first area R1. While the first robot cleaner 100a performs the cleaning operations, the second robot cleaner 100b remains on the docking station 200b, and thus cleaning by the second robot cleaner 100b does not performed. Referring to FIG. 15b, in a case where the first robot cleaner 100a has completed cleaning of the first area R1, then the second robot cleaner100b is departed from the docking station 200b, and performs cleaning operations in the first area R1. While the first robot cleaner 100a performs cleaning of the second area R2, the second robot cleaner 100b performs cleaning of the first area R1.

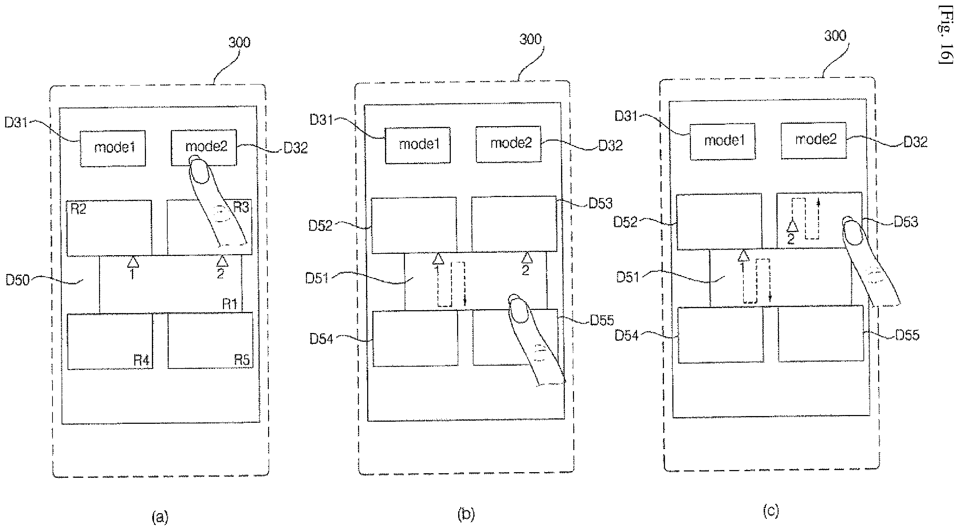

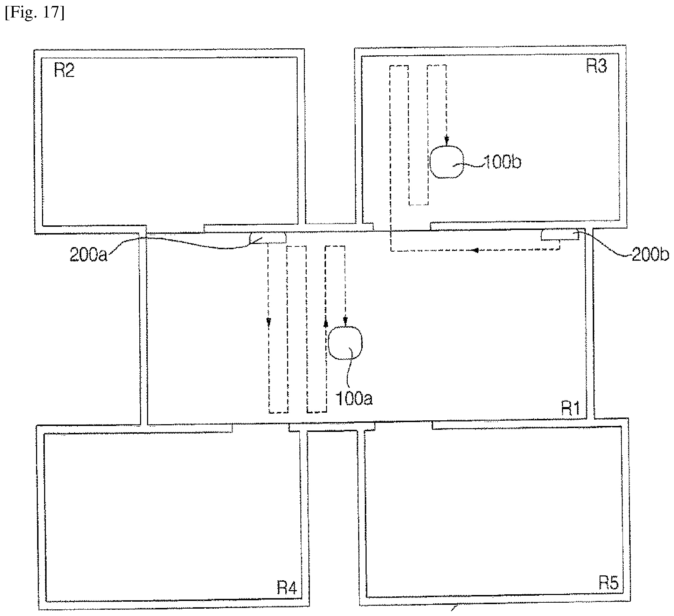

Referring to FIGS. 16 and 17, in the collaborative cleaning mode selection step S30, the step of a second mode cleaning is described which is performed in a case where a second mode (mode 2) from the plurality of collaborative cleaning modes is selected. Wherein, a description is given in which it is assume that the first and second robot cleaners 100a 100b as the collaborative robot cleaners are selected.

Referring to FIGS. 16(b) and 16(c), in a case where the second mode cleaning is selected, each of areas to be cleaned by the first and second robot cleaners 100a and 100b from the plurality of areas to be cleaned is allocated. A user map D50 including an area to be cleaned or traveled for cleaning is displayed on the display screen of the mobile handset 300.Each divided parts displayed on the user map D50 corresponds to the plurality of areas to be cleaned.In accordance with an embodiment, a first area R1, a second area R2, a third area R3, a fourth area R4 and a fifth area R5 correspond to a first part D51, a second part D52, a third part D53, a fourth part D54 and the fifth part D55 respectively on the user map D50.Referring to FIG. 16, in a case where a user touches the First part D51, the first area R1 to be cleaned by the first robot cleaner 100a is selected, and in a case where a user touches the third part D53, the third area R3 to be cleaned by the second robot cleaner 100b is allocated.

In the second mode cleaning step, the second mode is pre-set so that the first and second robot cleaners 100a and 100b perform cleaning of the allocated areas respectively. In this case, the first and second robot cleaners 100a and 100b perform cleaning of the first and third area R1, R3 allocated for their cleaning respectively.

In the second mode, more than two areas to be cleaned may be allocated to the first robot cleaner 100a, and more than two areas to be cleaned may be allocated to the second robot cleaner 100b.In the second mode, an area to be cleaned may be allocated such that at least one area or part to be cleaned by the first robot cleaner 100a overlaps at least one area or part to be cleaned by the second robot cleaner 100b.

Preferably, in the second mode cleaning step, all of the first and second robot cleaners 100a and 100b perform sucking of foreign substances, and at least one area or part of the plurality of areas may be allocated to the first cleaning robots 100a, and at least one area or part of the others of the plurality of areas may be allocated to the second cleaning robots 100b. Accordingly, it is possible to efficiently perform sucking of foreign substances on the entire cleaning or traveling area in a relatively short time by the plurality of robot cleaners 100a and 100b.

One scenario of the second mode cleaning is described below.Referring to FIG. 17, in a case where the second mode cleaning step is started, the first robot cleaner 100a is departed from the docking station 200a and performs cleaning operations in the first area R1 allocated for cleaning, and the second robot cleaner100b is departed from the docking station 200b and performs cleaning operations in the third area R3 allocated for cleaning. While the first robot cleaner 100a performs cleaning of the first area R1, the second robot cleaner100b performs cleaning of the third area R3.

The plurality of collaborative cleaning modes according to an embodiment may include a third mode cleaning. In the collaborative cleaning mode selection step S30, the step of a third mode cleaning is described which is performed in a case where the third mode from the plurality of collaborative cleaning modes is selected. Wherein, a description is given in which it is assume that the first and second robot cleaners 100a and 100b as the collaborative robot cleaners are selected.

In a case where the third mode is selected, the first robot cleaner 100a performs cleaning operations while moving, and the second robot cleaner 100b performs cleaning operations in a manner following the first robot cleaner 100a.In accordance with an embodiment, the second robot cleaner 100b may perform cleaning operations in a manner following the movement trajectory of the first robot cleaner 100a.In accordance with an embodiment, the second robot cleaner 100b may be pre-set to follow the first robot cleaner 100a if the first and second robot cleaners 100a and 100b are spaced a predetermined distance or more apart.

Furthermore, the plurality of collaborative cleaning modes may be configured to include various additional modes for collaborative cleaning operations by the plurality of robot cleaners.

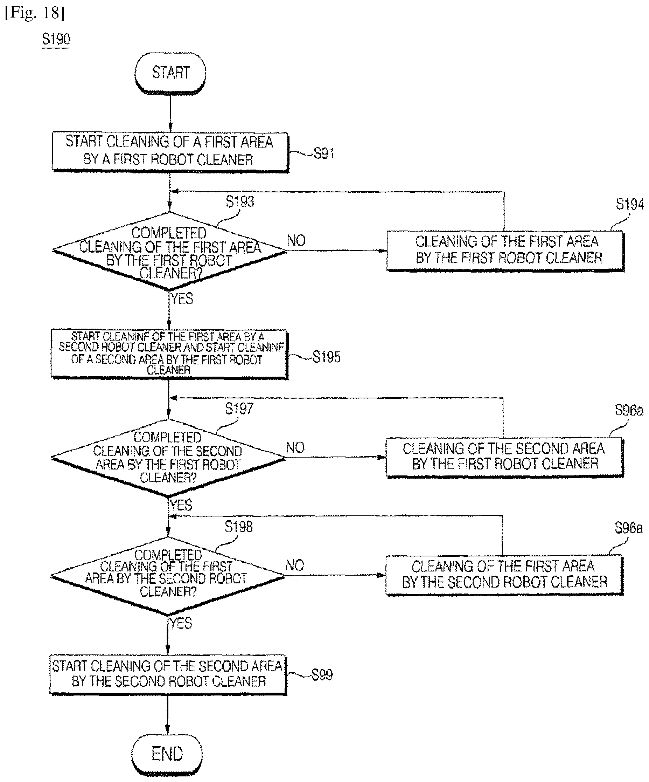

Referring to FIG. 18, one scenario of the first mode cleaning according to a preferred embodiment A is described below.Although, as an embodiment, FIG. 18 illustrates the cleaning up to the second area by the second robot cleaner 100b, but the present invention is not limited to this. It is, of course, apparent that this process may be applied to areas to be cleaned sequentially, such as the third area, the fourth area, or the like as the same or similar manner.

Referring to FIG. 18, in a case where the first mode cleaning step is started, the first robot cleaner 100a starts to perform cleaning of the first area S91.Thereafter, it is determined whether cleaning of the first area by the first robot cleaner 100a has been completed S193. If cleaning of the first area by the first robot cleaner 100a in S193 has not been completed yet, the first robot cleaner 100a continues to perform cleaning of the first area S194.On the other hand, if cleaning of the first area by the first robot cleaner 100a in S193 has been completed, the second robot cleaner 100b starts to perform cleaning of the first area S195.Furthermore, in a case where cleaning of the first area by the first robot cleaner 100a has been completed, the first robot cleaner 100a starts to perform cleaning of the second area S195. Thereafter, it is determined whether cleaning of the second area by the first robot cleaner 100a has been completed S197. If cleaning of the second area by the first robot cleaner 100a in S197 has not been completed yet, the first robot cleaner 100a continues to perform cleaning of the second area S96a.Thereafter, it is determined whether cleaning of the first area by the second robot cleaner 100b has been completed S198. If cleaning of the first area by the second robot cleaner 100b in S198 has not been completed yet, the second robot cleaner 100b continues to perform cleaning of the first area S96b.On the other hand, if cleaning of the second area by the first robot cleaner 100a in S 197 is completed, and cleaning of the first area by the second robot cleaner 100b in S198 is completed, the second robot cleaner 100b starts to perform cleaning of the second area S99.

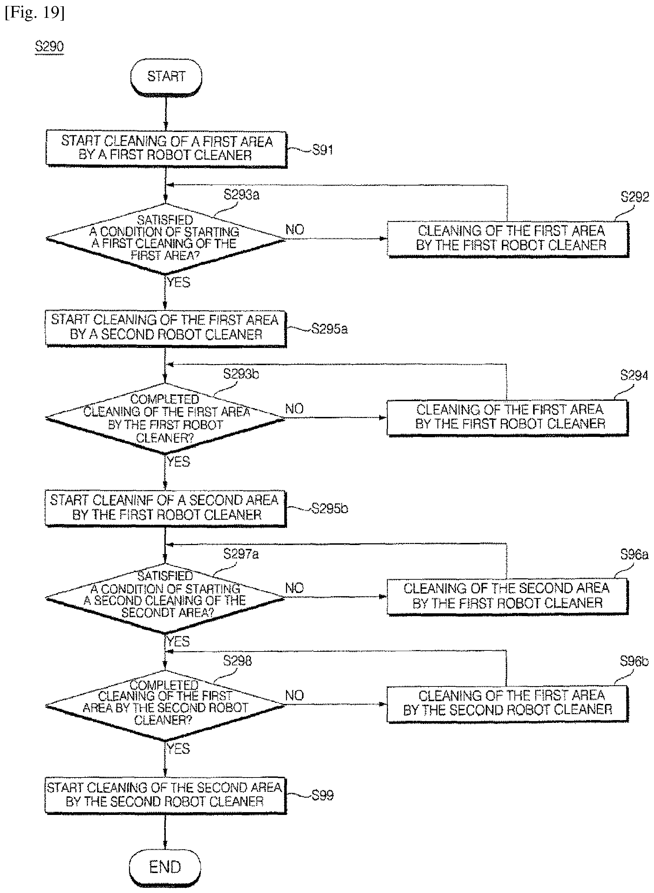

Referring to FIG. 19, one scenario of the first mode cleaning according to a preferred embodiment B is described below.Although, as an embodiment, FIG. 19 illustrates the cleaning up to the second area by the second robot cleaner 100b, but the present invention is not limited to this. It is, of course, apparent that this process may be applied to areas to be cleaned sequentially, such as the third area, the fourth area, or the like as the same or similar manner.

Referring to FIG. 19, in a case where the first mode cleaning step is started, the first robot cleaner 100a starts to perform cleaning of the first area S91.Thereafter, it is determined whether a condition of starting a first cleaning of the first area is satisfied S293a. If the condition of starting the first cleaning of the first area in S293a is not satisfied, the first robot cleaner 100a continues to perform cleaning of the first area S292, and the second robot cleaner 100b maintains a standby state in which cleaning is not performed.On the other hand, if the condition of starting the first cleaning of the first area in S293a is satisfied, the second robot cleaner 100b starts to perform cleaning of the first area S295a.Even after the second robot cleaner 100b has started cleaning of the first area S295a, a determination is performed of whether cleaning of the first area by the first robot cleaner 100a has been completed S293b, and thus if cleaning of the first area by the first robot cleaner 100a in S293b has not been completed yet, the first robot cleaner 100a continues to perform cleaning of the first area.In a case where cleaning of the first area by the first robot cleaner 100a has been completed, the first robot cleaner 100a starts to perform cleaning of the second area S295b.Thereafter, it is determined whether a condition of starting a second cleaning of the second area is satisfied S297b. If cleaning of the second area by the first robot cleaner 100a in S297a has not been completed yet, the first robot cleaner 100a continues to perform cleaning of the second area S96a.Thereafter, it is determined whether cleaning of the first area by the second robot cleaner 100b has been completed S298. If cleaning of the first area by the second robot cleaner 100b in S298 has not been completed yet, the second robot cleaner 100b continues to perform cleaning of the first area S96b.On the other hand, if the condition of starting the second cleaning in S297a is satisfied and if cleaning of the first area by the second robot cleaner 100b in S298 has been completed, the second robot cleaner 100b starts to perform cleaning of the second area S99.

## Claims

1. A method for controlling a plurality of robot cleaners (100a, 100b) comprising a first robot cleaner (100a) and a second robot cleaner (100b), the method comprising:
starting cleaning of a first area (R1) by the first robot cleaner (100a), and
starting cleaning of the first area (R1) by the second robot cleaner (100b) after the first robot cleaner (100a) has completed cleaning of the first area (R1),
wherein the first area (R1) and a second area (R2) are included in a plurality of areas (R1 - R5) which are divided from a cleaning or traveling area for cleaning,
wherein the first robot cleaner (100a) and the second robot cleaner (100b) perform cleaning of the first area (R1) and the second area (R2) sequentially, respectively,
the method being **characterized in that** while the first robot cleaner (100a) performs the cleaning operations in the first area (R1), the second robot cleaner (100b) remains on a docking station (200a) of the second robot cleaner (100b).

2. The method according to claim 1, further comprising starting cleaning of the second area (R2) by the second robot cleaner (100b) after the first robot cleaner (100a) has completed cleaning of the second area (R2) more than a predetermined standard percentage of the second area (R2),

3. The method according to claim 2, further comprising starting cleaning of the second area (R2) by the second robot cleaner (100b) after the second robot cleaner (100b) has completed cleaning of the first area (R1).

4. The method according to claim 2, further comprising starting cleaning of the second area (R2) by the second robot cleaner (100b) after the first robot cleaner (100a) has completed cleaning of the second area (R2).

5. The method according to claim 1, wherein the first robot cleaner (100a) performs sucking of foreign substances, and the second robot cleaner (100b) performs wet mopping.

6. The method according to claim 1, further comprising selecting the first robot cleaner (100a) and the second robot cleaner (100b) from a plurality of robot cleaners (100a, 100b) registered for a collaborative cleaning before the first robot cleaner (100a) or the second robot cleaner (100b) starts cleaning.

7. The method according to claim 1, further comprising selecting one from the first and second robot cleaners (100a, 100b) as a master robot cleaner before the first robot cleaner (100a) or the second robot cleaner (100b) starts cleaning, the master robot cleaner controlling cleaning operations of the other robot cleaner.

8. The method according to claim 1, further comprising selecting a first mode from a plurality of collaborative cleaning modes which is per-set to perform cleaning of the first and second areas (R1, R2) by the first and second robot cleaners (100a, 100b) sequentially respectively before the first robot cleaner (100a) or the second robot cleaner (100b) starts cleaning.

9. The method according to claim 8, wherein the plurality of collaborative cleaning modes include a second mode in which areas to be cleaned by the first and second cleaning robots (100a, 100b) are allocated respectively and the first and second cleaning robots (100a, 100b) are pre-set to perform cleaning of each allocated area.

10. The method according to claim 1, wherein the first robot cleaner (100a) and the second robot cleaner (100b) share a map including the cleaning or traveling area for cleaning.

11. A plurality of robot cleaners (100a, 100b) comprising:
a first robot cleaner (100a);
a second robot cleaner (100b); and
a controller (140) configured to perform the method according to any one of the preceding claims.

## Patentansprüche

1. Verfahren zum Steuern mehrerer Roboterreiniger (100a, 100b), die einen ersten Roboterreiniger (100a) und einen zweiten Roboterreiniger (100b) umfassen, wobei das Verfahren die folgenden Schritte umfasst:
Starten der Reinigung eines ersten Bereichs (R1) durch den ersten Roboterreiniger (100a); und
Starten der Reinigung des ersten Bereichs (R1) durch den zweiten Roboterreiniger (100b), nachdem der erste Roboterreiniger (100a) die Reinigung des ersten Bereichs (R1) beendet hat,
wobei der erste Bereich (R1) und ein zweiter Bereich (R2) in mehreren Bereichen (R1-R5) enthalten sind, die von einem Reinigungs- oder Bewegungsbereich zur Reinigung unterteilt wurden,
wobei der erste Roboterreiniger (100a) und der zweite Roboterreiniger (100b) die Reinigung des ersten Bereichs (R1) und des zweiten Bereichs (R2) jeweils nacheinander ausführen,
wobei das Verfahren **dadurch gekennzeichnet ist, dass** dann, während der erste Roboterreiniger (100a) den Reinigungsbetrieb im ersten Bereich (R1) ausführt, der zweite Roboterreiniger (100b) bei einer Dockingstation (200a) des zweiten Roboterreinigers (100b) bleibt.

2. Verfahren nach Anspruch 1, das ferner das Starten der Reinigung des zweiten Bereichs (R2) durch den zweiten Roboterreiniger (100b) umfasst, nachdem der erste Roboterreiniger (100a) die Reinigung des zweiten Bereichs (R2) um mehr als einen festgelegten Standardprozentsatz des zweiten Bereichs (R2) beendet hat.

3. Verfahren nach Anspruch 2, das ferner das Starten der Reinigung des zweiten Bereichs (R2) durch den zweiten Roboterreiniger (100b) umfasst, nachdem der zweite Roboterreiniger (100b) die Reinigung des ersten Bereichs (R1) beendet hat.

4. Verfahren nach Anspruch 2, das ferner das Starten der Reinigung des zweiten Bereichs (R2) durch den zweiten Roboterreiniger (100b) umfasst, nachdem der erste Roboterreiniger (100a) die Reinigung des zweiten Bereichs (R2) beendet hat.

5. Verfahren nach Anspruch 1, wobei der erste Roboterreiniger (100a) das Aufsaugen von Fremdstoffen ausführt und der zweite Roboterreiniger (100b) das Nasswischen ausführt.

6. Verfahren nach Anspruch 1, das ferner das Auswählen des ersten Roboterreinigers (100a) und des zweiten Roboterreinigers (100b) aus mehreren Roboterreinigern (100a, 100b) umfasst, die für eine kollaborative Reinigung registriert sind, bevor der erste Roboterreiniger (100a) oder der zweite Roboterreiniger (100b) die Reinigung startet.

7. Verfahren nach Anspruch 1, das ferner das Auswählen eines aus dem ersten und dem zweiten Roboterreiniger (100a, 100b) als Master-Roboterreiniger umfasst, bevor der erste Roboterreiniger (100a) oder der zweite Roboterreiniger (100b) die Reinigung startet, wobei der Master-Roboterreiniger den Reinigungsbetrieb des anderen Roboterreinigers steuert.

8. Verfahren nach Anspruch 1, das ferner das Auswählen einer ersten Betriebsart aus mehreren kollaborativen Reinigungsbetriebsarten umfasst, die voreingestellt ist, um eine Reinigung des ersten und des zweiten Bereichs (R1, R2) durch den ersten und den zweiten Roboterreiniger (100a, 100b) jeweils nacheinander auszuführen, bevor der erste Roboterreiniger (100a) oder der zweite Roboterreiniger (100b) die Reinigung startet.

9. Verfahren nach Anspruch 8, wobei die mehreren kollaborativen Reinigungsbetriebsarten eine zweite Betriebsart umfassen, bei der Bereiche, die durch den ersten und den zweiten Reinigungsroboter (100a, 100b) zu reinigen sind, jeweils zugeordnet werden, und wobei der erste und der zweite Reinigungsroboter (100a, 100b) vorgegeben sind, um eine Reinigung des jeweiligen zugeordneten Bereichs auszuführen.

10. Verfahren nach Anspruch 1, wobei sich der erste Roboterreiniger (100a) und der zweite Roboterreiniger (100b) eine Karte teilen, die den Reinigungs- oder Bewegungsbereich zur Reinigung umfasst.

11. Mehrere Roboterreiniger (100a, 100b), die Folgendes umfassen:
einen ersten Roboterreiniger (100a);
einen zweiten Roboterreiniger (100b); und
eine Steuerung (140), die konfiguriert ist, das Verfahren nach einem der vorhergehenden Ansprüche auszuführen.

## Revendications

1. Procédé pour commander une pluralité de robots nettoyeurs (100a, 100b) comportant un premier robot nettoyeur (100a) et un second robot nettoyeur (100b), le procédé comportant les étapes consistant à :
débuter le nettoyage d'une première zone (R1) par le premier robot nettoyeur (100a), et
débuter le nettoyage de la première zone (R1) par le second robot nettoyeur (100b) après que le premier robot nettoyeur (100a) a terminé le nettoyage de la première zone (R1),
dans lequel la première zone (R1) et une seconde zone (R2) sont incluses dans une pluralité de zones (R1à R5) qui sont divisées à partir d'une zone de nettoyage ou de déplacement, pour le nettoyage,
dans lequel le premier robot nettoyeur (100a) et le second robot nettoyeur (100b) effectuent le nettoyage de la première zone (R1) et de la seconde zone (R2) de manière séquentielle, respectivement, le procédé étant **caractérisé en ce que** pendant que le premier robot nettoyeur (100a) réalise les opérations de nettoyage dans la première zone (R1), le second robot nettoyeur (100b) reste sur une station d'accueil (200a) du second robot nettoyeur (100b).

2. Procédé selon la revendication 1, comportant en outre le début du nettoyage de la seconde zone (R2) par le second robot nettoyeur (100b) après que le premier robot nettoyeur (100a) a terminé le nettoyage de la seconde zone (R2) plus qu'un pourcentage standard prédéterminé de la seconde zone (R2).

3. Procédé selon la revendication 2, comportant en outre le début du nettoyage de la seconde zone (R2) par le second robot nettoyeur (100b) après que le second robot nettoyeur (100b) a terminé le nettoyage de la première zone (R1).

4. Procédé selon la revendication 2, comportant en outre le début du nettoyage de la seconde zone (R2) par le second robot nettoyeur (100b) après que le premier robot nettoyeur (100a) a terminé le nettoyage de la seconde zone (R2).

5. Procédé selon la revendication 1, dans lequel le premier robot nettoyeur (100a) procède à l'aspiration de substances étrangères, et le second robot nettoyeur (100b) effectue un balayage-lavage.

6. Procédé selon la revendication 1, comportant en outre la sélection du premier robot nettoyeur (100a) et du second robot nettoyeur (100b) parmi une pluralité de robots nettoyeurs (100a, 100b) enregistrés pour un nettoyage collaboratif avant que le premier robot nettoyeur (100a) et le second robot nettoyeur (100b) débutent le nettoyage.

7. Procédé selon la revendication 1, comportant en outre la sélection d'un robot parmi les premier et second robots nettoyeurs (100a, 100b) en tant que robot nettoyeur maître avant que le premier robot nettoyeur (100a) ou le second nettoyeur (100b) débute le nettoyage, le robot nettoyeur maître commandant des opérations de nettoyage de l'autre robot nettoyeur.

8. Procédé selon la revendication 1, comportant en outre la sélection d'un premier mode parmi une pluralité de modes de nettoyage collaboratif, lequel mode étant préréglé pour effectuer le nettoyage des première et seconde zones (R1, R2) par les premier et second robots nettoyeurs (100a, 100b) de manière séquentielle, respectivement, avant que le premier robot nettoyeur (100a) ou le second robot nettoyeur (100b) débute le nettoyage.

9. Procédé selon la revendication 8, dans lequel les modes de la pluralité de modes de nettoyage collaboratif incluent un second mode dans lequel des zones à nettoyer par les premier et second robots nettoyeurs (100a, 100b) sont respectivement allouées et les premier et second robots nettoyeurs (100a, 100b) sont préréglés pour réaliser le nettoyage de chaque zone allouée.

10. Procédé selon la revendication 1, dans lequel le premier robot nettoyeur (100a) et le second robot nettoyeur (100b) partagent une carte incluant la zone de nettoyage ou de déplacement, pour le nettoyage.

11. Pluralité de robots nettoyeurs (100a, 100b) comportant :
un premier robot nettoyeur (100a) ;
un second robot nettoyeur (100b) ; et
une commande (140) configurée pour mettre en oeuvre le procédé selon l'une quelconque des revendications précédentes.
